# EUROPEAN PATENT SPECIFICATION

(11) **EP 0 909 583 B1**
(45) Date of publication and mention of the grant of the patent: **10.04.2002**
(21) Application number: 98306104.5
(22) Date of filing: 30.07.1998
(51) Int. Cl.: B01J 35/04, B01J 35/06, F25D 23/00, A61L 9/00

(54) **Direct-cool refrigerator having a deodorizing catalytic material and use of a supported catalyst in a direct-cool refrigerator.**
Kühlschrank mit deodorisierendem katalytischen Material und Verwendung eines Trägerkatalysators in einem Kühlschrank.
Réfrigérateur comprenant un matériel catalytique déodorisant et utilisation d'un catalyseur supporté dans un réfrigérateur.

(30) Priority: 17.10.1997 JP 30369897; 20.10.1997 JP 30494197; 08.04.1998 JP 9625498
(43) Date of publication of application: 21.04.1999
(60) Divisional application: 01202035.0
(73) Proprietor: Nikki-Universal Co., Ltd., Chiyoda-ku, Tokyo (JP)
(72) Inventor: Akiyama, Kazuya, Hiratsuka-shi, Kanagawa-ken (JP); Sakura, Makoto, Hiratsuka-shi, Kanagawa-ken (JP); Teramoto, Sayuri, Hiratsuka-shi, Kanagawa-ken (JP); Iida, Eiki, Hiratsuka-shi, Kanagawa-ken, (JP)
(74) Representative: W.P. Thompson & Co.

(56) References cited:
- EP-A- 0 398 263
- GB-A- 804 490
- DATABASE WPI Section Ch, Week 9318 Derwent Publications Ltd., London, GB; Class D22, AN 93-148601 XP002089493 & JP 05 084441 A (HITACHI LTD) , 6 April 1993
- DATABASE WPI Section Ch, Week 9851 Derwent Publications Ltd., London, GB; Class D22, AN 98-598022 XP002089494 & JP 10 267510 A (MATSUSHITA REIKI KK) , 9 October 1998

## Description

This invention relates to the use in a refrigerator of a supported catalyst having a catalytic material supported on a carrier which is substantially non-adsorptive of specific components in malodor, deleterious or other objectionable gases that are to be removed or decomposed, thereby preventing the emission of unpleasant odors and other undesirable phenomena due to said particular components. The invention further relates to a direct-cool refrigerator assembled therein.

With a view to purifying malodorous and deleterious gases by removing therefrom various substances (hereinafter collectively referred to as "odor components") that are composed of e.g. oxides of sulfur (SOx), nitrogen compounds such as oxides of nitrogen (NOx) ammonia and amines, alcohols, aldehydes, organic acids such as acetic acid and sulfur compounds such as hydrogen sulfide, mercaptan, dimethyl sulfide and dimethyl disulfide in atmospheric air, there have so far been developed many techniques and methods that rely upon the use of adsorbents, e.g. porous ceramics such as activated alumina and silica gel, zeolites, activated carbon and the like.

Conventional deodorizing filters have been prepared by having deodorizing catalysts supported on porous ceramic or zeolite carriers capable of adsorbing odor components. The capability of such filters is not limited to decomposition of the odor components in the objectionable gases of interest by means of the deodorizing catalyst.

Due to the large pore volumes in the carrier, the odor components and the reaction products resulting from the catalytic deodorization can be effectively adsorbed thereon or stored therein to thereby abate the odor components. However, the odor components and the reaction products that have been adsorbed thereon or stored therein are so sensitive to changes in environmental factors such as temperature and humidity that they are liable to desorb from the deodorizing filter to thereby give off an unpleasant smell.

Aluminum honeycomb structures have good weathering properties and high durability, and their walls can be made very thin; hence, the pressure drop that will develop in the structure is sufficiently reduced to make them suitable for use as catalyst supports in high-volume processing operations.

According to Unexamined Japanese Utility Model Public Disclosure Nos. 21736/1989 and 87235/1990, as well as Japanese Patent Public Disclosure Nos 303518/1990 and 303523/1990, aluminum foil honeycomb structures in which the cell separating walls in the filter are made thin enough to reduce the pressure drop across the filter can be applied to ozone decomposing catalysts. However, none of these patents teach or suggest the applicability of the structures to deodorizing catalysts on the basis of the fact that aluminum foils are substantially incapable of absorbing odor components.

Japanese Patent Public Disclosure No. 84441/1993 discloses a deodorant catalyst composed of Fe₂O₃ and at least one oxide selected from MnO₂, NiO, CuO, Co₃ O₄, CO₂, PtO or PdO supported by honeycomb, plate, mesh or granular oxide having specific surface area of 20-1000m²/g.

British Patent 804490-A discloses a refrigerator having a catalytic agent which, when heated, catalyses a reaction in which odorous gases in a cold storage compartment are transformed into less odorous gases.

An object, therefore, of the present invention is to provide a novel supported catalyst for use in a refrigerator.

According to the present invention there is provided a use of a supported catalyst having a deodorizing catalytic material supported on a carrier, which carrier has a shape selected from the group consisting of a honeycomb, a corrugation, a plate, a foil or a screen and lacks the ability to adsorb odor components to be removed or decomposed, in a direct-cool refrigerator in the region of the chilling section thereof, to remove or decompose odor components therefrom.

The present invention also relates to a direct-cool refrigerator assembled with said supported catalyst.

An advantage which may be achieved by the present invention is the use in a refrigerator of a catalyst which, in the face of environmental changes, will not emit by itself any of unpleasant odors.

An advantage which may be achieved by the present invention is the use in a refrigerator of a catalyst which, in the face of environmental changes in temperature and humidity, will not emit by itself any unpleasant odors.
Figure 1 is a graph showing the relationship between the amount of supported hopcalite and the intensity of malodor (in an olfactory test);
Figure 2 shows a support for Catalyst I that was made of a corrugated aluminum foil;
Figure 3 shows a support for Catalyst J that was made of a stainless steel (SUS-304) plain weave screen;
Figure 4 shows in both a perspective and a sectional view the direct-cool refrigerator used in Test 5;
Figure 5 is a graph showing the temperature distribution in the chilling compartment of the direct-cool refrigerator; as well as the time profiles of temperatures at different positions in the chilling compartment;
Figure 6 is a graph showing how the performance of a catalyst in deodorizing methyl mercaptan was affected by the position of its installation in the direct-cool refrigerator;
Figure 7 is a graph showing how the performance of catalysts in deodorizing methyl mercaptan was affected by their cross-sectional area;
Figure 8 is a graph showing how the performance of catalysts in deodorizing methyl mercaptan was affected by their geometry;
Figure 9 is a graph showing how the performance of catalysts in deodorizing methyl mercaptan was effected by the number of cells;
Figure 10 is a graph showing how the performance of a catalyst in deodorizing methyl mercaptan was affected by the method of its installation in the direct-cool refrigerator; and
Figure 11 shows two methods of installing the deodorizing catalyst in the direct-cool refrigerator.

The support or carrier material for the supported catalyst according to the first aspect of the invention is not limited to any particular type insofar as it is substantially deficient of the ability to adsorb specific odor components to be removed or decomposed. Preferred examples include non-adsorptive ceramics such as α-alumina, cordierite and mullite, metals, particularly stainless steel which is resistant to corrosion, as well as elementary aluminum and aluminum layer-covered metals that are lightweight and easy to handle. The carrier of the catalyst of the invention is shaped to various forms sclected from a honeycomb, a corrugation, a plate, a foil and a screen ; these forms can be processed to geometrical shapes that fit diverse purposes. In order to reduce the pressure drop it undergoes, the carrier is preferably shaped into a honeycomb structure and a particularly preferred support is a honeycomb structure made of an aluminum foil. This type of carrier can be prepared by a known method for producing a laminate for a honeycomb structure as described in Japanese Patent Public Disolosure No. 338065/1993. The use of metal foils is very advantageous for the purpose of reducing the pressure loss and they can be processed and produced at an incomparably low cost. The thickness of metal foils can be selected at any values from the range of 10 - 200µm. A particularly preferred range is 10 - 50 µm, with the range 10 - 30 µm being the most preferred.

The catalytic material to be used in the supported catalyst according to the first aspect of the invention is not limited to any particular type insofar as it is capable of decomposing or removing a specific component such as odor components that is to be decomposed or removed. If the catalytic material is to be used for deodorizing or ozone decomposition, platinum group elements such as platinum, palladium, osmium, iridium and rhodium, iron group elements such as iron, cobalt and nickel, elements of group I such as copper and silver, elements of group VII such as manganese and rare earth metals such as cerium and lanthanum may be used as catalytic materials either independently or in appropriate combinations in either an elementary, oxide or complex form. Hopcalite which is a complex of manganese and copper can be used as a preferred deodorizing catalytic material.

The catalytic material is generally supported on the carrier in an amount of 0.1 - 50 grams per liter, preferably 0.5 - 30 grams per liter. In the case that the supported catalyst is to be used as a deodorizer, if the catalytic material is supported in an amount of less than 0.1 gram per liter, it may fail to exhibit the desired deodorizing performance. If more than 50 grams per liter of the catalytic material is supported, the supported catalytic material will adsorb by itself the odor components that has to be removed or decomposed and the deodorizing filter will give off an unpleasant odor.

The catalytic material can be supported by any conventional method such as the slurry method using inorganic binders such as silica and alumina sols or organic binders such as natural resins (e.g. starch, casein or gelatin) and various water-soluble synthetic resins including cellulose, water-soluble polyamides and quaternary ammonium salts. A particularly preferred binder is a water-base acrylic urethane resin coating because it gives a glossy and thick film and exhibits high hardness, high chemical resistance, good deflection (flexing properties) and high wear resistance.

If an inorganic binder is to be used, the weight ratio of the binder to the catalytic material is generally 1:5 to 1:20, preferably 1:6 to 1:12; if an organic binder is to be used, the weight ratio of the binder to the catalytic material is 1:5 to 1:40, preferably 1:7 to 1:20, if the binder, whether inorganic or organic, is used in an unduly small amount, the necessary strength of support is not attained and the catalytic material will readily separate from the support, a defect generally called "flaking" or "shedding". If the binder is used in an excessively large amount, the catalytic material is covered by the binder and fails to exhibit the intended catalytic activity.

According to the invention, the supported catalyst having a catalytic material supported on a carrier that substantially lacks the ability to adsorb components to be removed or decomposed may be installed in a direct-cool refrigerator in positions near the chilling section thereof. Upon tuming the chilling section on and off, the temperature in the refrigerating compartment will change cyclically and natural convection will occur accordingly in the internal air to accomplish effective removal of the odor components from the refrigerating compartment. This is only possible by the supported catalyst according to the first aspect of the invention which is less likely to give off unpleasant odor components in the face of environmental changes such as temperature changes or even in a humid condition.

The following working and comparative examples as well as tests are provided for the purpose of further illustrating the present invention but are in no way to be taken as limiting.

### Example 1

Ion-exchanged water (1824 g) was mixed with 220 g of a water-based urethane resin coating (water-based urethane MOKUBU CLEAR, the trade name of Washin Kagaku Kogyo K.K.). Thereafter 100 g of hopcalite (N-840, the trade name of Nissan Girdler Catalyst Co. Ltd. containing 20.5 wt.% CuO, 54.4wt.% MnO and 2.6wt.% K) was added and the mixture was stirred to prepare a slurry solution. The slurry solution was then sprayed over an aluminum foil honeycomb support (product of Oji Kenzai Kogyo K.K.; 54.25 cells/cm²(350 cells/in²); 35.5 mm x 69 mm x 10 mm), which had been fabricated by expanding a laminate of 15µm thick aluminum foils. The excess slurry solution was blown off by a jet of air and the assembly was dried at a temperature of 150°C for 1 hour to prepare aluminum foil honeycomb-supported catalyst A having 26.4 g of hopcalite and 2.6g of urethane resin supported per liter of the catalyst

### Example 2

Ion-exchanged water (778 g) was mixed with an alumina sol (ALUMINA SOL, the trade name of Nissan Chemical Industries, Ltd.). Thereafter, 1000 g of hopcalite (N-840, the trade name of Nissan Girdler Catalyst Co., Ltd.; containing 20.5 wt.% CuO, 54.4 wt.% MnO and 2.6 wt% K) was added and the mixture was stirred to prepare a slurry solution. The slurry solution was sprayed over an aluminum foil honeycomb support (product of Oji Kenzai Kogyo K.K.; 54.25 cells/cm² (350 cells/in²); 35.5 mm x 69 mm x 10 mm), which had been fabricated as described in Example 1. The excess slurry solution was blown off by a jet of air and the assembly was dried at a temperature of 150°C for 1 hour to prepare aluminum foil honeycomb-supported catalyst B having 27.3 g of hopcalite and 2.7 g of alumina supported per liter of the catalyst.

### Example 3

The same slurry solution as prepared in Example 2 was sprayed over a cordierite honeycomb support (product of NGK INSULATORS, LTD.; 62 cells/cm² (400 cells/in²); 35.5 mm x 69 mm x 10 mm) and the excess slurry solution was blown off with a jet of air. Thereafter, the assembly was dried at a temperature of 150°C for 1 hour to prepare cordierite honeycomb-supported catalyst C having 28.5 g of hopcalite and 2.8 g alumina supported per liter of the catalyst.

### Comparative Example 1

Ion-exchanged water (614 g) was mixed with an alumina sol (ALUMINA SOL 200, the trade name of Nissan Chemical Industries, Ltd.). Thereafter, 700 g of hopcalite (N-840, the trade name of Nissan Girdler Catalyst Co., Ltd.; containing 20.5 wt% CuO, 54.4 wt% MnO and 2.6 wt,% K) and 249 g of a pentacil-type zeolite (PURASHIVE-420, the trade name of UOP: silica-to-alumina ratio≥400) were added and the mixture was stirred to prepare a slurry solution. The slurry solution was sprayed over HONEYCLE support (product of NICHIAS CORP.; 54.25 cells/cm² (350cells/in²); (35.5 mm x 69 mm x 10 mm BET surface area = 120 m²/g), which was a honeycomb structure fabricated by laminate sheets of ceramic fibers bound together with a silicate gel. The excess slurry solution was blown off with a jet of air and, thereafter, the assembly was dried at a temperature of 150°C for 1 hour to prepare HONEYCLE-supported catalyst X having 2.49 g of hopcalite, 10.7 g of zeolite and 4.0g of alumina supported per liter of the catalyst.

### Test 1

Samples of supported catalyst were each cut to a size of 35.5 mm x 69 x 10 mm and installed in a refrigerator for use in an average home consisting of a husband, a wife and two children. After one month, each sample filter was taken out of the refrigerator and left for one hour in a 16L closed glass container adjusted to a temperature of 26°C and a humidity of 95%. Thereafter, the intensity of the odor within the glass container was measured by an olfactory test according to the following hexadic scale; 0 = no odor, 1 = barely perceivable (detection threshold level), 2 = perceivable (recognition threshold level), 3 = distinct, 4 = strong, 5 = very strong, and 6 = overpowering. The results are shown in Table 1 below. Ethyl alcohol was the most abundant of the sample gases that were detected in the olfactory test by means of an FPD gas chromatographic analyzer.

**Table 1**

| **Sample Filter** | **Score** |
|---|---|
| Aluminum foil honeycomb-supported Catalyst A of Example 1 | 1 |
| Aluminum foil honeycomb-supported Catalyst B of Example 2 | 1 |
| Cordierite honeycomb-supported Catalyst C of Example 3 | 1 |
| Aluminum foil honeycomb carrier used in Examples 1 and 2 | 0 |
| Corderite carrier used in Example 3 | 0 |
| HONEYCLE-supported catalyst of Comparative Example 1 | 3.5 |
| HONEYCLE used in Comparative Example | 3 |

As is clear from Table 1, the conventional porous HONEYCLE carrier and the catalyst having a deodorizing catalytic material supported on that porous HONEYCLE carrier, both of which had been exposed to various malodors in the refrigerator, gave off unpleasant odors in a high humid condition. In contrast, the aluminum foil honeycomb carrier used in Examples 1 and 2, the catalysts A and B having a deodorizing catalytic material supported on that carrier, as well as the cordierite honeycomb carrier used in Example 3 and the catalyst C having the same deodorizing catalytic material supported on that honeycomb carrier were less likely to give off unpleasant odors in the face of a temperature change in a high humid condition. This provides a support of the fact that the supported catalysts of the invention having a deodorizing catalytic material supported on the aluminum foil honeycomb carrier and the cordierite honeycomb carrier are both non-adsorptive of odor components are less likely to give off unpleasant odors in the face of environmental changes.

### Test 2

Samples of supported catalyst each cut to a size of 35.5 mm x 69 mm x 10 mm were installed in a 16L closed glass container adjusted to a temperature of 5°C and a humidity of 50%. The glass container was injected with specified amounts of three odor components, i.e. ethyl acetate, ethyl alcohol and toluene. The adsorption isotherms of the three catalyst samples were measured for each odor component and the saturated adsorption (mg) of one unit of each catalyst sample was determined for each odor component at an equilibrium concentration of 100 ppm. The results are shown in Table 2 below.

**Table 2**

| **Sample Filter** | **Ethyl acetate** | **Ethyl alcohol** | **Toluene** |
|---|---|---|---|
| Aluminum foil honeycomb-supported Catalyst A of Example 1 | 12.7 | 12.6 | 12.0 |
| Aluminum foil honeycomb carrier used in Example 1 | 7.6 | 7.5 | 7.0 |
| Cordierite honeycomb-supported Catalyst C of Example 3 | 12.9 | 12.8 | 12.3 |
| Cordierite honeycomb carrier used in Example 3 | 7.9 | 7.8 | 7.4 |
| HONEYCLE-supported Catalyst X of comparative Example 1 | 191 | 111.7 | 114.8 |
| HONEYCLE carrier used in Comparative Example 1 | 98 | 53 | 55 |

As is clear from Table 2, both the conventional porous HONEYCLE carrier used in Comparative Example 1 and the Catalyst X having a deodorizing catalytic material supported on that porous carrier adsorbed large amounts of ethyl acetate, ethyl alcohol and toluene. In contrast, the aluminum foil honeycomb carrier used in Example 1, the cordierite honeycomb carrier used in Example 3, as well as the Catalyst A having deodorizing catalytic material supported on the aluminum foil honeycomb carrier and the Catalyst C having the same deodorizing catalytic material supported on the cordierite honeycomb carrier adsorbed only about a tenth of those odor components. This provides a support of the fact that the supported catalysts of the invention were substantially non-adsorptive of odor components.

### Test 3

Samples of supported catalyst each cut to a size of 35.5 mm x 69 mm x 10 mm were installed in a 161 closed glass container, which in turn was injected with 200 µl of 99.5% ethyl alcohol. The glass container was left for 2 hours in a refrigerator adjusted to a humidity of 50% and a temperature of 5°C Thereafter, the catalyst samples were taken out of the glass container and transferred in to a 1001 closed glass container adjusted to room temperature and 95% humidity. After 5 minutes, the concentration (ppm) of ethyl alcohol in the 100-L glass container was measured with an FID gas chromatographic analyzer. The results are shown in Table 3 below.

**Table 3**

| **Carrier or Supported Catalyst** | **Ethyl Alcohol (ppm)** |
|---|---|
| Aluminum foil honeycomb-supported Catalyst A of Example 1 | 22 |
| Aluminum foil honeycomb-supported Catalyst B of Example 2 | 28 |
| Cordierite honeycomb-supported Catalyst C of Example 3 | 35 |
| Aluminum foil honeycomb carrier used in Examples 1 and 2 | ≤ 1 |
| Cordierite honeycomb carrier used in Examples 3 | 3 |
| HONEYCLE-supported Catalyst X of Comparative Example 1 | 215 |
| HONEYCLE carrier used in Comparative Example 1 | 150 |

As is clear from Table 3, ethyl alcohol which is a representative causative factor of the malodors in refrigerators was emitted in large amounts in a humid condition from the conventional HONEYCLE carrier used in Comparative Example 1 which was adsorptive of odor components, as well as from the Catalyst X having a deodorizing catalytic materials supported on that HONEYCLE carrier. In contrast, the aluminum foil honeycomb carrier and the cordierite honeycomb carrier that were specified by the invention as carriers were substantially non-adsorptive of odor components, as well as the Catalysts A and B of Examples 1 and 2, respectively, which had a deodorizing catalytic material supported on the aluminum foil honeycomb carrier and the Catalyst C having the same deodorizing catalytic material supported on the cordierite honeycomb carrier emitted ethyl alcohol in amounts no more than a seventh of the concentrations emitted from the comparative porous samples. This provides a proof of the fact that the supported catalysts of the invention which have a deodorizing catalytic material supported on carriers substantially non-adsorptive of odor components are less likely to give off unpleasant odors in the face of environmental changes.

### Test 4

Samples of supported catalyst each cut to a cylindrical shape of 21 mm in diameter and 10 mm in thickness were installed in a flow-type reactor through which a sample gas containing 100 ppm of methyl mercaptan and having ambient temperature and humidity was passed at a flow rate of 90,000 liters per hour. Thirty minutes after starting the passage of the sample gas, the concentration of methyl mercaptan was measured at both the entrance and exit of the reactor by means of an FPD gas chromatographic analyzer and the percent removal of methyl mercaptan after 30 min was calculated. The results are shown in Table 4 below.

**Table 4**

| **Supported Catalyst** | **Removal of Methyl Mercaptan. %** |
|---|---|
| Aluminum foil honeycomb-supported Catalyst A of Example 1 | 92 |
| Aluminum foil honeycomb-supported Catalyst B of Example 2 | 95 |
| Cordierite honeycomb-supported Catalyst C of Example 3 | 96 |
| HONEYCLE-supported Catalyst X of Comparative Example 1 | 95 |

As is clear from Table 4, the Catalyst A and B of Examples 1 and 2 of the invention having a deodorizing catalytic material supported on the aluminum carrier which was substantially non-adsorptive of odor components, as well as the Catalyst C of Example 3 having the same deodorizing catalytic material supported on the cordierite honeycomb carrier which was also substantially non-adsorptive of odor components were no less affective in removing methyl mercaptan (a representative malodorous substance emitted from foods, in parkicular, proteins) than the Catalyst X of Comparative Example 1 which had a deodorizing catalytic material supported on the conventional porous carrier adsorptive of odor components. This provides a proof of the fact that although the supported catalysts of the invention have a deodorizing catalytic material supported on carriers that are substantially non-adsorptive of odor components, the action of the deodorizing catalytic material is sufficient to ensure satisfactory performance in removing methyl mercaptan.

### Example 4

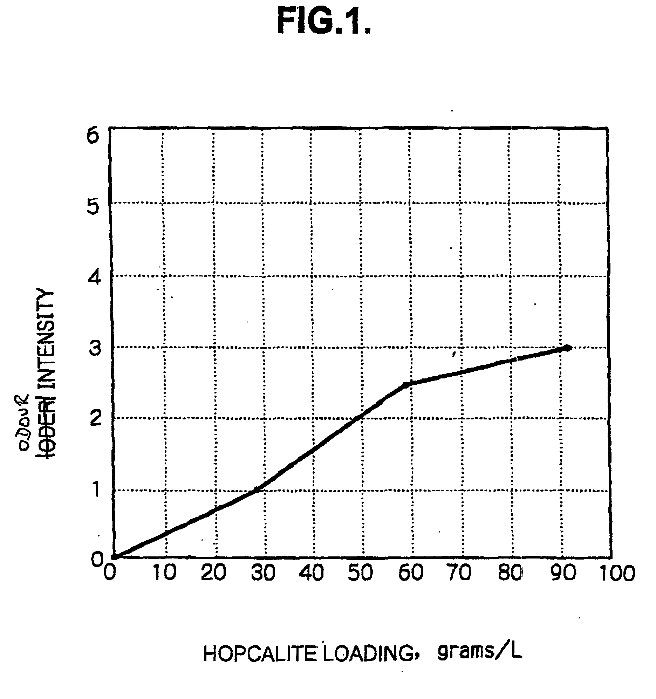

Three samples of aluminum foil honeycomb-supported catalyst were prepared as in Example 1, except that the amount of hopcalite to be supported was varied by adjusting the spray frequency of the slurry solution. These samples were subjected to an olfactory test in accordance with the procedure described in Test 1. The results arc shown in Figure 1, from which one can see that the emission of an unpleasant odor became perceivable when more than 50 g of hopcalite was supported per liter of the deodorizing filter.

### Example 5

Aluminum foil honeycomb-supported Catalyst D having 0.73 g of hopcalite and 0.07 g of urethane resin supported per catalyst on an aluminum foil honeycomb carrier was prepared as in Example 1, except that the honeycomb carrier had a different number of cells (77.5 cells/cm²(500 cells/in²)).

### Example 6

Aluminum foil honeycomb-supported Catalysts E, F and G having different amounts of hopcalite (0.65 g, 0.73 g and 0.78 g) and a urethane resin (0.06 g, 0.07 g and 0.08 g) supported per catalyst on aluminum foil honeycomb carriers were prepared as in Example 1, except that the carriers each measuring 71 mm x 69 mm x 10 mm had 54.25, 77.5 and 116.25 cells/cm²(350, 500 and 750 cells/in²).

### Example 7

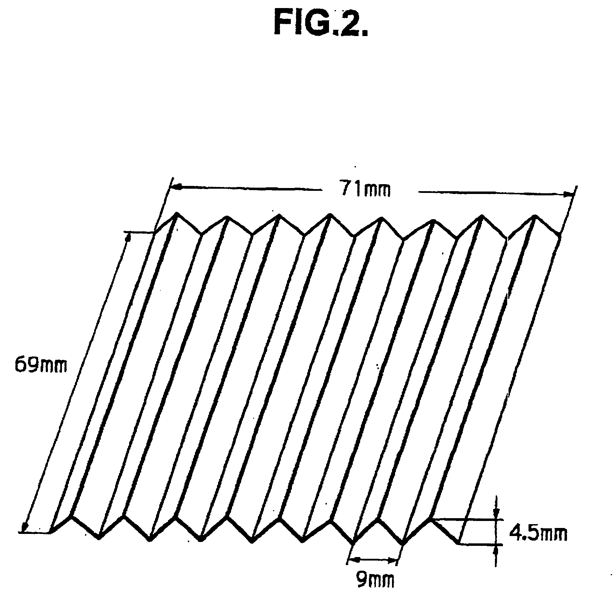

A 0.3 mm thick aluminum plate of a size of 71 mm x 69 mm was provided. In addition, a 0.05 mm thick aluminum foil was corrugated as shown in Figure 2. The aluminum plate was brush-coated with the same slurry solution as used in Example 1 and dried at a temperature of 150°C to prepare supported Catalyst H having 0.15 g of hopcalite and 0.01 g of a urethane resin supported per catalyst on the aluminum plate. In a separate step, the aluminum corrugated foil was brush-coated with the same slurry as used in Example 1 and dried at a temperature of 150°C to prepare aluminum corrugated foil-supported Catalyst I having a 0.25 g of hopcalite and 0.03 g of a urethane resin supported per catalyst on the corrugated aluminum foil.

### Example 8

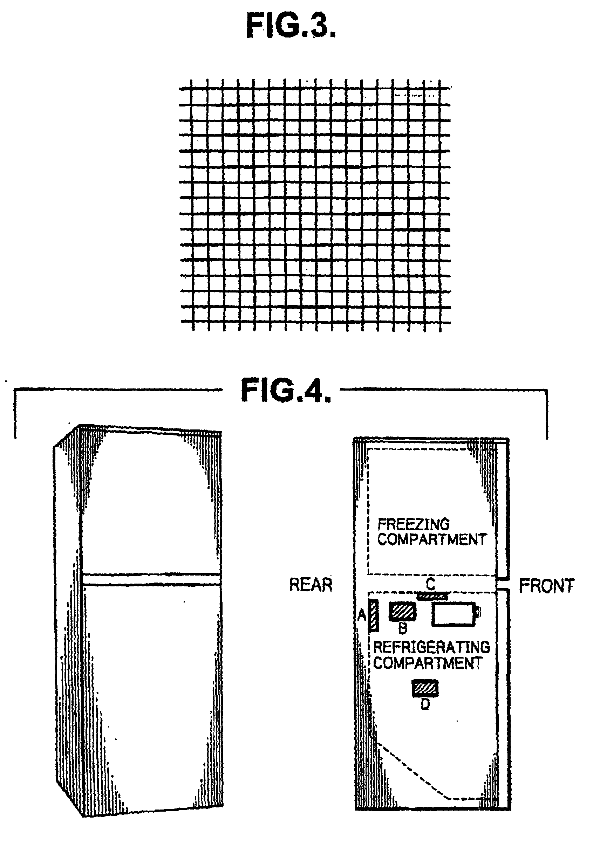

A stainless steel (SUS-304) plain wave screen of 3.1 mesh/cm² (20 mesh/in²) (see Figure 3; wire diameter, 0.5 mm; screen opening, 0.77 mm) was dipped in the same slurry solution as used in Example 1. The screen was recovered and the excess slurry solution was blown off with a jet of air. The assembly was then dried at a temperature of 150°C to prepare stainless steel screen-supported Catalyst J having 0.16 g of hopcalite and 0.02 g of a urethane resin supported per catalyst on the stainless steel screen.

### Test 5

Measurement of time-dependent changes in the temperature distribution in a direct-cool refrigerator:

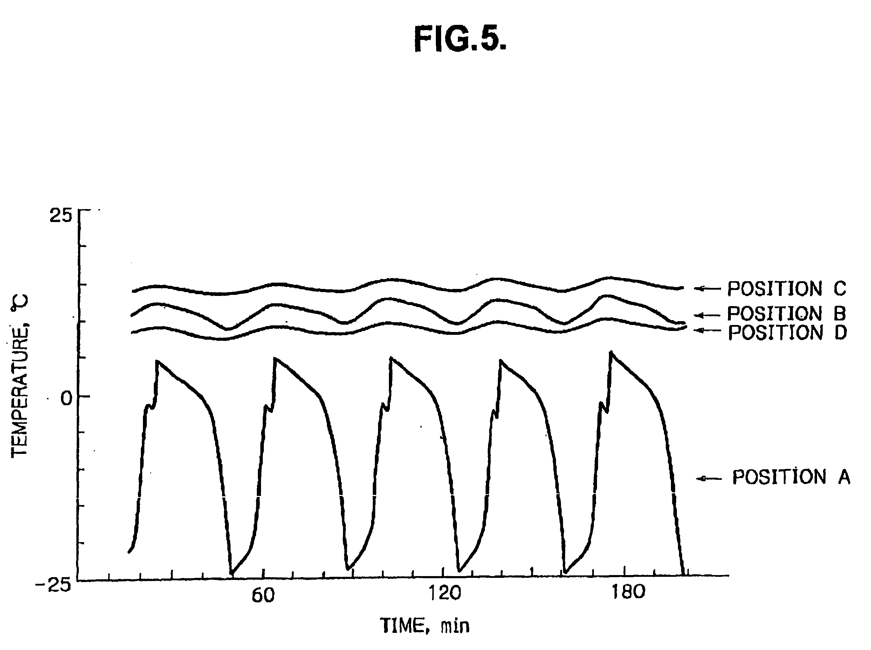

A direct-cool refrigerator of the type shown in Figure 4 was used. It had a chilling section provided in the wall farthest from the front door and the interior of refrigerating compartment was cooled by the internal natural convection of air. A thermocouple was set in the following four positions to measure the temperatures in those positions: A on the farthest wall of the refrigerating compartment where the chilling section was provided; B on a side wall; C on the top wall; and D which was the center of the refrigerating compartment. The temperature in the refrigerating compartment was represented by the temperature in position D. The time profiles of the respective temperatures are shown graphically in Figure 5. The refrigerator under test was not equipped with a fan to forcibly agitate the internal air and the cooling of the interior of the refrigerator was solely cooled by natural convection under normal operating conditions.

As is clear from Figure 5, the temperature of the farthest wall (in position A) where the chilling section of the refrigerating compartment was provided varied cyclically between 5 and 25°C at intervals of 40 minutes. On the other hand, the temperatures in positions B (on a side wall), C (on the top wall) and D (at the center) were substantially constant. Thus, the farthest wall of the refrigerator where its chilling section was provided experienced the greatest change in temperature and one can reasonably assume that the strongest convection is taking place near the farthest wall of the refrigerator.

### Test 6

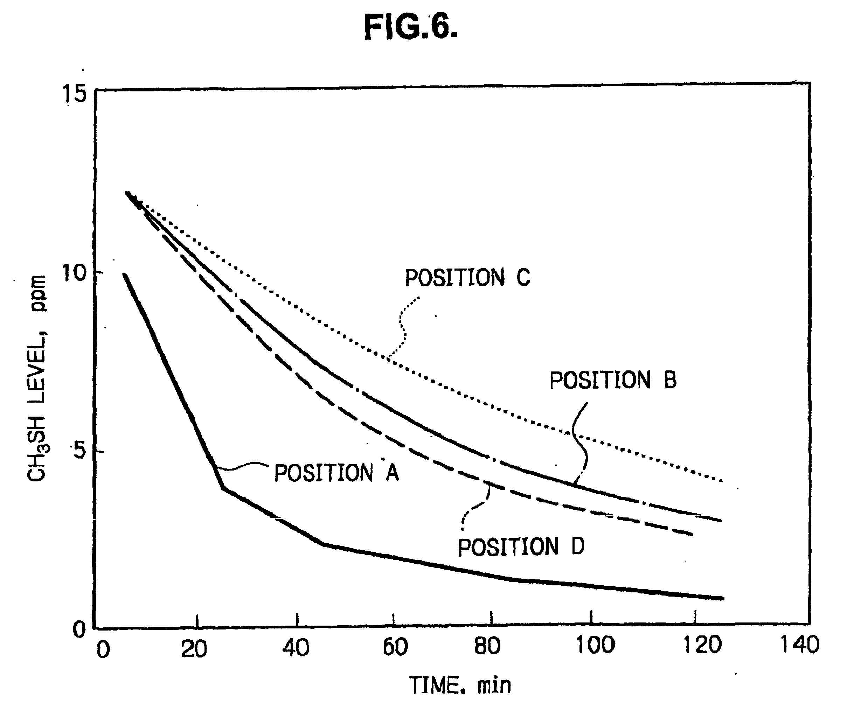

Various sample catalysts were set in specified positions (see Figure 4) in a direct-cool refrigerator having an internal capacity of 150 liters. After closing the front door, 1.8 ml of 100% methyl mercaptan was injected into the refrigerating compartment and the internal air was sampled at intervals of 20 minutes. The concentration of methyl mercaptan was measured with FPD gas chromatographic analyzer and the results are shown in Figures 6-10. As in Test 5, no fan was used to forcibly agitate the air in the refrigerating compartment but its interior was cooled by natural convection under normal conditions.

Figure 6 shows graphically effect of the position of catalyst installation by plotting the time profiles of the methyl mercaptan level for the case where the aluminum foil honeycomb-supported Catalyst E of Example 6 was set in position A (on the farthest wall of the refrigerating compartment), B (on a sidewall), C (on the top wall) and D (in the center).

As is clear, from Figure 6, the removal of methyl mercaptan was the most effective when the deodorizing catalyst was set in position A on the farthest wall of the refrigerating compartment. This is in agreement with the assumption from Test 6, i.e., the strongest convection is occurring near the farthest wall of the refrigerating compartment where the chilling section was provided, thereby assuring the most effective contact between the deodorizing catalyst and the internal air. This provides a support of the fact that the highest deodorizing effect is attained by setting a deodorizing catalyst near the chilling section of a direct-cool refrigerator.

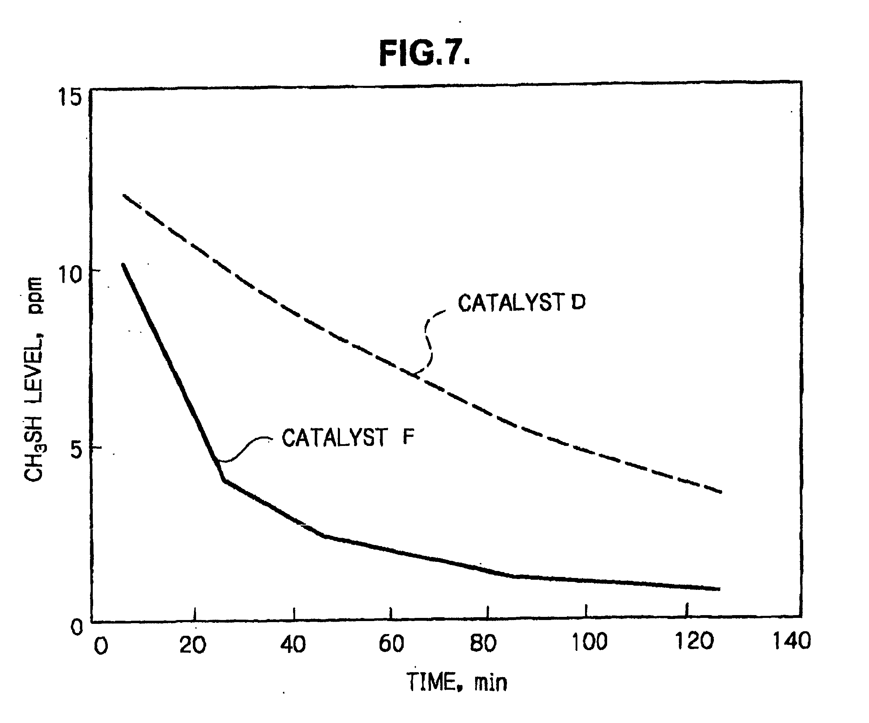

Figure 7 shows how the efficiency of a deodorizing catalyst is affected by its cross-sectional area. The effect is shown graphically by the time profiles of the methyl mercaptan level for the case where the aluminum foil honeycomb-supported Catalyst D of Example 5 (35.5 mm x 69 mm x 10 mm) and the aluminum foil honeycomb-supported Catalyst F (71 mm x 69 mm x 5 mm) were set in position A on the farthest wall of the refrigerator. The two catalysts were the same in the number of cells and capacity but different in cross-sectional area.

As is clear from Figure 7, the Catalyst F having a larger cross-sectional area than the Catalyst D having the same capacity and cell number could achieve more efficient removal of methyl mercaptan. This provides a support of the fact that the efficiency of a deodorizing catalyst increases with the increasing area that traverses an air flow.

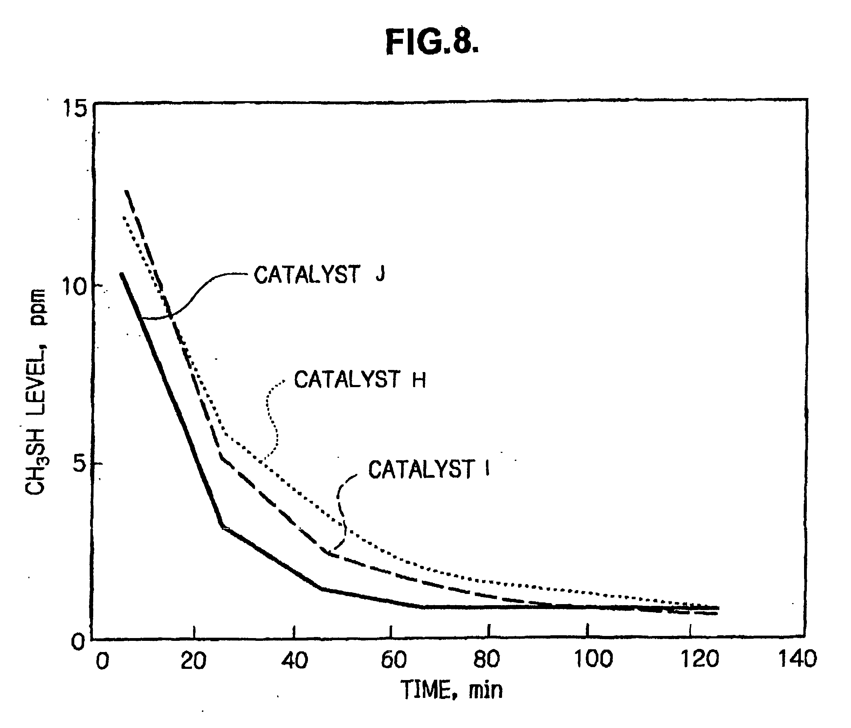

Figure 8 shows how the efficiency of a deodorizing catalyst is affected by its geometry. The effect is shown graphically by the time profiles of the methyl mercaptan level for the case where the aluminum plate-supported Catalyst H, the corrugated aluminum foil-supported Catalyst I (both being fabricated in Example 7) and the stainless steel screen-supported Catalyst J of Example 8 were set in position A on the farthest wall of the refrigerator. The three catalysts were the same in cross-sectional area but different in geometry.

As is clear from Figure 8, the most efficient removal of methyl mercaptan was achieved by the Catalyst J having a grid pattern to provide an increased geometric surface area. It should, however, be noted that the Catalyst I supported on the corrugated aluminum foil and the Catalyst H supported on the aluminum plate were not very much inferior to the Catalyst J but achieved satisfactory removal of methyl mercaptan. This provides a support of the fact that the three types of deodorizing catalyst tested that have different geometric shapes are as effective as the honeycomb carrier supported catalysts.

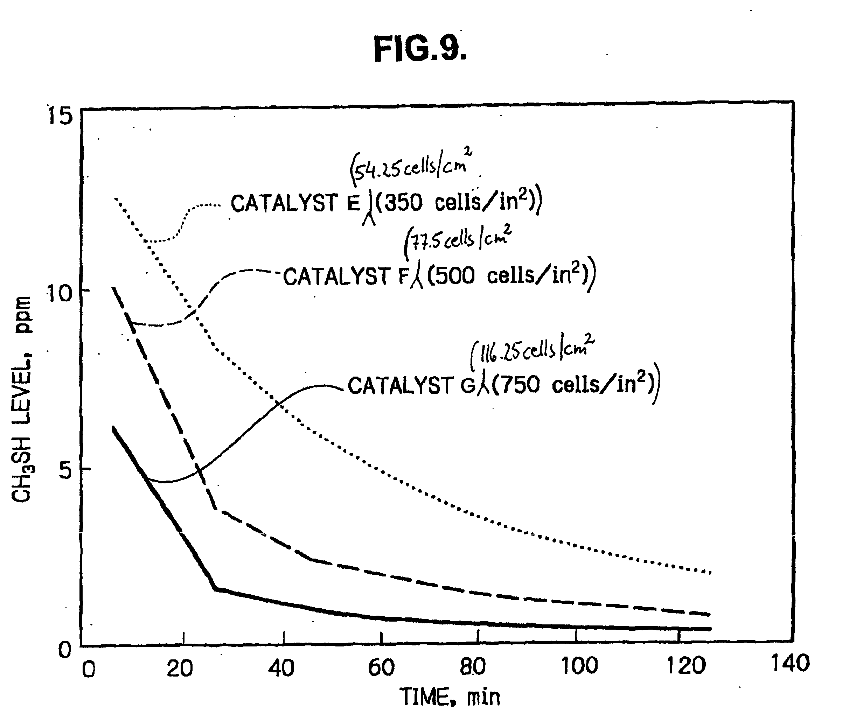

Figure 9 shows how the efficiency of a deodorizing Catalyst Hs affected by the number of cells it has. The effect is shown graphically by the time profiles of the methyl mercaptan level for the case where the aluminum foil honeycomb-supported Catalysts E, F and G of Example 5 which had 350, 500 and 750 cells, respectively, per square inch were set in position A on the farthest wall of the refrigerating compartment.

As is clear from Figure 9, the efficiency of removal of methyl mercaptan was improved by increasing the number of cells in a catalyst. This provides a support of the fact that the efficiency of a deodorizing catalytic material supported on a carrier having a honeycomb structure can be improved by increasing the number of cells it has.

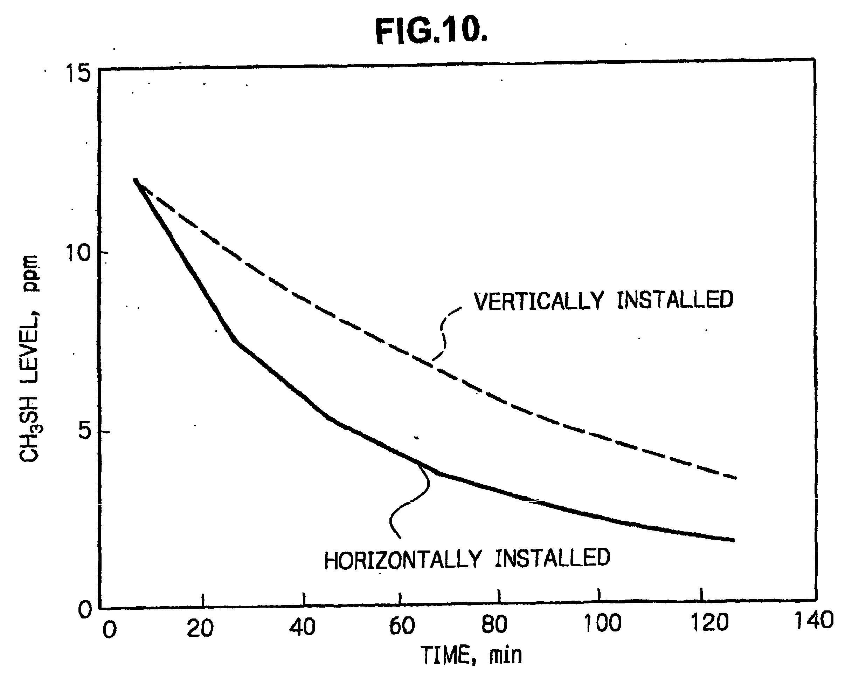

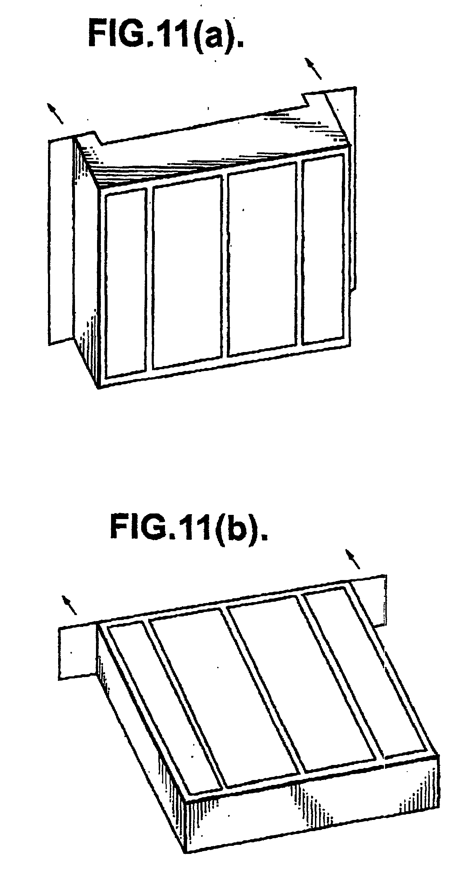

Figure 10 shows how the efficiency of a deodorizing catalyst is affected by the method of its installation. The effect is shown graphically by the time profiles of the methyl mercaptan level for the following two cases: one where the aluminum foil honeycomb-supported Catalyst D of Example 5 (77.5 cells.cm²; 35.5 mm x 69 mm x 10 mm) was installed in a vertical direction along a plane 5 mm distant from the farthest wall of the refrigerating compartment (see Figure 11 a); and the other where the same catalyst was installed in position A on the farthest wall of the refrigerating compartment in such a way that it protruded horizontally from the wall inside the refrigerating compartment (see Figure 11 b).

As is clear from Figure 10, the efficiency of the deodorizing catalyst could be improved by projecting it horizontally from the farthest wall of the refrigerating compartment so as to accomplish more efficient contact with the internal air. This provides a proof of the fact that the efficiency of a deodorizing catalyst can be improved by installing it in a position where it traverses the natural convection of air within the refrigerating compartment (i.e., it projects horizontally inside the refrigerating compartment as shown in Figure 11 b).

### Industrial Applicability

The present invention provides a novel use in a direct-cool refrigerator of a deodorizing filter which, in the face of environmental changes, is less likely to give off unpleasant odors due to the malodor components that are adsorbed on or stored in the filter per se and which yet has comparable deodorizing performance to the existing deodorizing filters.

The efficiency of the deodorizing catalyst can be enhanced by fitting it in a direct-cool refrigerator in areas near the chilling section that serves as the driving force for creating natural convection of the air within the refrigerating compartment.

## Claims

1. Use of a supported catalyst having a deodorizing catalytic material supported on a carrier, which carrier has a shape selected from the group consisting of a honeycomb, a corrugation, a plate, a foil or a screen and lacks the ability to adsorb odor components to be removed or decomposed, in a direct-cool refrigerator in the region of the chilling section thereof, to remove or decompose odor components therefrom.

2. Use according to claim 1 wherein the carrier comprises a non-adsorptive ceramic material or a metal.

3. Use according to claim 2 wherein the non-adsorptive ceramic material is α-alumina, coordierite or mullite.

4. Use according to claim 2 wherein the metal is stainless steel.

5. Use according to claim 2 wherein the metal is aluminum.

6. Use according to any one of claims 2 to 4 wherein the carrier is covered with an aluminum layer.

7. Use according to any one of claims 1 to 6, wherein the deodorizing catalytic material is hopcalite.

8. A direct-cool refrigerator comprising, in the region of the chilling section thereof, a deodorizing catalytic material supported on a carrier, which carrier has a shape selected from the group consisting of a honeycomb, a corrugation, a plate, a foil or a screen and lacks the ability to adsorb odor components to be removed or decomposed.

## Patentansprüche

1. Verwendung eines getragenen Katalysators, der ein desodorierendes katalytisches Material aufweist, getragen auf einem Träger, welcher Träger eine Form aufweist, die aus der Gruppe ausgewählt wird, die aus einer Wabe, einer Wellung, einer Platte, einer Folie oder einem Sieb besteht und dem die Fähigkeit mangelt, zu entfernende oder abzubauende Geruchskomponenten zu adsorbieren, in einem Kühlschrank mit Direktkühlung in dem Bereich des Kühlungsteils davon, um Geruchskomponenten daraus zu entfernen oder abzubauen.

2. Verwendung nach Anspruch 1, worin der Träger ein nicht adsorptives Keramikmaterial oder ein Metall umfasst.

3. Verwendung nach Anspruch 2, worin das nicht adsorptive Keramikmaterial α-Tonerde, Cordierit oder Mullit ist.

4. Verwendung nach Anspruch 2, worin das Metall Edelstahl ist.

5. Verwendung nach Anspruch 2, worin das Metall Aluminium ist.

6. Verwendung nach einem der Ansprüche 2 bis 4, worin der Träger mit einer Aluminiumschicht bedeckt ist.

7. Verwendung nach einem der Ansprüche 1 bis 6, worin das desodorierende katalytische Material Hopkalit ist.

8. Kühlschrank mit Direktkühlung, der Folgendes umfasst: in dem Bereich des Kühlungsteils davon ein auf einem Träger getragenes desodorierendes katalytisches Material, welcher Träger eine Form aufweist, die aus der Gruppe ausgewählt wird, die aus einer Wabe, einer Wellung, einer Platte, einer Folie oder einem Sieb besteht und dem die Fähigkeit mangelt, zu entfernende oder abzubauende Geruchskomponenten zu adsorbieren.

## Revendications

1. Utilisation d'un catalyseur supporté ayant un matériau catalytique désodorisant supporté sur un véhicule, lequel véhicule a une forme choisie parmi le groupe constitué par un nid d'abeilles, une ondulation, une plaque, une feuille ou une grille, et n'a pas la capacité d'adsorber des composants d'odeurs devant être éliminés ou décomposés, dans un réfrigérateur à refroidissement direct dans la zone de la section de refroidissement de celui-ci, pour éliminer ou décomposer des composants d'odeurs depuis celle-ci.

2. Utilisation selon la revendication 1, dans laquelle le véhicule comprend un matériau de céramique non adsorbant ou un métal.

3. Utilisation selon la revendication 2, dans laquelle le matériau de céramique non adsorbant est de l'α-alumine, de la cordiérite ou de la mullite.

4. Utilisation selon la revendication 2, dans laquelle le métal est de l'acier inoxydable.

5. Utilisation selon la revendication 2, dans laquelle le métal est de l'aluminium.

6. Utilisation selon l'une quelconque des revendications 2 à 4, dans laquelle le véhicule est recouvert d'une couche d'aluminium.

7. Utilisation selon l'une quelconque des revendications 1 à 6, dans laquelle le matériau catalytique désodorisant est de l'hopcalite.

8. Réfrigérateur à refroidissement direct, comprenant, dans la zone de la section de refroidissement de celui-ci, un matériau catalytique désodorisant supporté sur un véhicule, lequel véhicule a une forme choisie parmi le groupe constitué par un nid d'abeilles, une ondulation, une plaque, une feuille ou une grille, et n'a pas la capacité d'adsorber des composants d'odeurs devant être éliminés ou décomposés.
